Europäisches Patentamt

(19) European Patent Office

Office européen des brevets

(11) Publication number: **0 235 938**
**A2**

## (12) EUROPEAN PATENT APPLICATION

(21) Application number: **87300831.2**

(22) Date of filing: **30.01.87**

(51) Int. Cl.4: **F23L 9/02** , F23L 9/04 , F23B 1/22 , F23C 1/00 , F23L 15/00

The title of the invention has been amended (Guidelines for Examination in the EPO, A-III, 7.3).

(30) Priority: **31.01.86 GB 8602435**
**30.07.86 GB 8618621**

(43) Date of publication of application:
**09.09.87 Bulletin 87/37**

(84) Designated Contracting States:
**AT BE CH DE ES FR GB GR IT LI LU NL SE**

(71) Applicant: **HENLEY BURROWES AND COMPANY LIMITED**
**Sunnyside Road**
**Barbourne Worcester WR1 1RJ(GB)**

(72) Inventor: **Porter, David**
**15 Wheatfield Avenue**
**Worcester(GB)**

(74) Representative: **Ajello, Michael John**
**38a Bramhall Lane South**
**Bramhall Stockport Cheshire SK7 1AH(GB)**

(54) **Solid fuel combustion apparatus.**

(57) A boiler of the kind in which a bed of solid fuel is carried on a moving conveyor (l3) in one direction through a combustion chamber (ll). A fan (2l) supplies air via pipes (40, 4l) to injection nozzles (42, 43) which direct streams of air respectively upstream and downstream within the boiler casing to enhance combustion of the bed of fuel on the conveyor and of the combustion gases issuing therefrom, and to distribute cooling air evenly across the boiler chamber at its downstream end. Advantages accrue from efficient combustion within the boiler chamber and subsequent efficient cooling of exhaust gases which helps to solidify molten in suspension solids thus preventing deposition on the boiler walls and gas exit tubes.

FIG.3

# A BOILER

THIS INVENTION concerns a boiler in which a bed of solid fuel is carried continuously or intermittently on a moving conveyor in one direction through a combustion chamber, the fuel being hopper-fed at a controlled rate to the inlet or upstream end of the conveyor.

In a boiler of this kind the conveyor consists of an endless line of fire bars motor driven through the combustion chamber by a pair of chains. Usually, a supply of combustion air is provided between the upper and lower strands of the conveyor, and combustion takes place above the fuel bed so that the fuel is fully combusted by the time it reaches the downstream end of the upper strand. A flow control gate determines the rate of introduction of fuel at the upstream end of the conveyor.

Boilers of this kind are capable of achieving high efficiency combustion of coal but it is likely to be less efficient when burning certain alternative kinds of solid fuel such as refuse derived fuel and waste derived fuel, in pelleted form. The inherent calorific value of such alternative fuels is usually less than that of coal.

An object of the present invention is to provide a boiler adapted to achieve high efficiency combustion when supplied with alternative kinds of solid fuel.

According to the present invention there is provided a boiler in which a bed of solid fuel is carried on a moving conveyor in one direction through a combustion chamber, characterised by an air or other gas injection nozzle disposed above the conveyor adjacent the downstream or output end thereof and connected to a supply of air or other gas to direct a stream thereof towards the upstream or inlet end thereof such that the air stream passes over the fuel in counter-current with the gaseous products of combustion to enhance combustion of the bed of fuel on the conveyor.

An embodiment of the invention will now be described, by way of example only, with reference to the accompanying drawings in which:-

Fig. I is a schematic illustration of the principal parts of a boiler made in accordance with the invention;

Fig. 2 is an enlarged elevation of a modified form of one of said parts.

and Fig. 3 is a schematic perspective view of the further modified form of the invention.

A boiler casing 10 encloses a combustion chamber a part of whose wall is indicated at 11, in a generally horizontal cylindrical form. A chain grate conveyor consists of a continuous series of fire bars 12 carried along an upper conveying strand 13 by chains 14 which are motor driven to carry a bed of solid fuel supplied from a feed hopper 15, through the combustion chamber 11 in one direction from left to right in Fig. I. A control gate 16 is adjustable to determine the rate of input of fuel into the boiler. Air for combustion is introduced between the upper and lower strands of the conveyor.

The system is designed such that substantially complete combustion will have taken place by the time the bed of fuel has travelled throughout the length of the boiler so that only ash remains to be deposited from the upper strand 13 into an outlet chute 17. Gaseous combustion products pass in the direction of arrow 18 to the atmosphere via a stack - (not shown).

An air injection nozzle 19 is located above the upper strand 13 of the conveyor adjacent the downstream or output end thereof. The nozzle is fed via pipe 20 made of alloy steel or similar material, with a supply of air from a fan 21 situated outside the boiler casing 10. A pair of dampers 22 and 23 control the flow of air into pipe 20. The section of pipe 20 between nozzle 19 and an airtight rotary connector 24 is supported in bearings 25 to be rotatable as indicated by arrow 26 so that the nozzle 19 may be moved from its operative position as illustrated, through approximately 90° to an inoperative position below the upper and lower strands of the conveyor. Lever 27 and counterweight 28 are used to select the rotational position of pipe 20.

In use, with the boiler operating on a solid fuel such as refuse derived fuel or waste derived fuel, with or without a proportion of coal dust to enhance its calorific value or even with coal, and in order to ensure complete combustion of the fuel, further air is introduced above the upper strand of the conveyor, via nozzle 19. Thus a stream of air is directed along the combustion chamber towards the upstream end thereof, that is in counter-current with the gaseous products of combustion travelling in the direction of arrow 18. This air stream creates turbulence within the boiler and thus thorough mixing of liberated combustion gases to achieve high efficiency combustion of the fuel. In its passage to the nozzle 19 the air from fan 21 flows along pipe 20 in the base of the combustion chamber so that the pipe acts as a heat exchanger to pre-heat the air before introduction.

In addition to the air supplied by fan 21, additional constituents may be aspirated into the heated air flow to control the emission of noxious gases such as dioxins which may not be completely destroyed during the thermal process within the boiler. The flow of air and other constituents is controlled by damper 23 which may be operated manually or automatically in accordance with the conditions prevailing within the combustion chamber.

If the boiler alternatively is supplied with coal, the air supply from fan 21 may be discontinued by closing damper 22, and the pipe 20 may be rotated to bring nozzle 19 to its inoperative position below the conveyor. In this condition the boiler will operate in the conventional manner without the counterflow air stream, since complete combustion of coal or certain other fuels may not require this additional air.

In addition to improving the combustion and thus energy efficiency of the boiler, it is known that some alternative fuels when combusted create gases with a high dioxin content so that, conventionally, the combustion gases must be disposed of in a controlled and contained manner. With the present invention, the dioxin content in the exhausted gases is considerably reduced as a result of the enhanced combustion above the fuel bed.

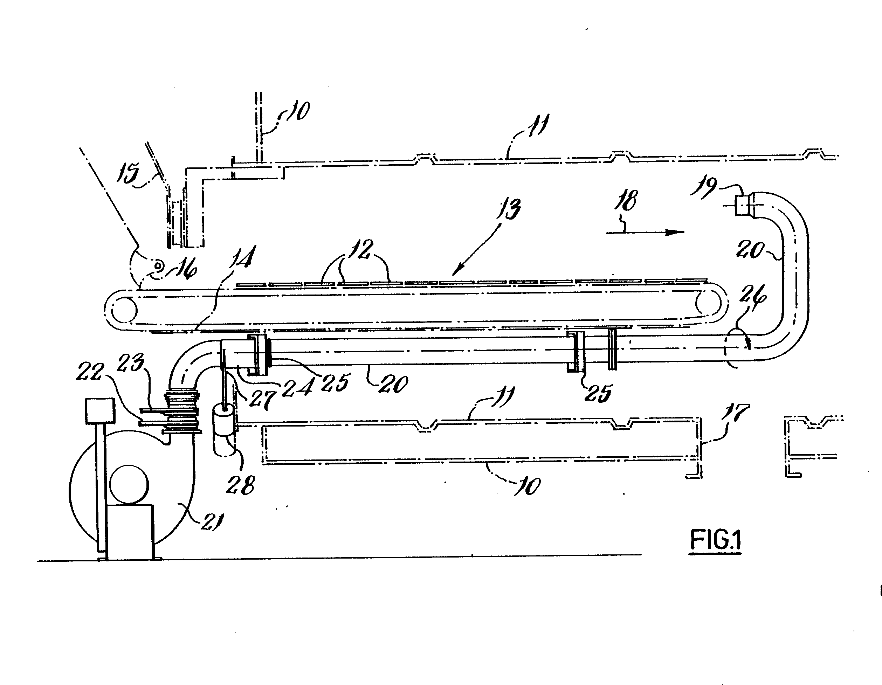

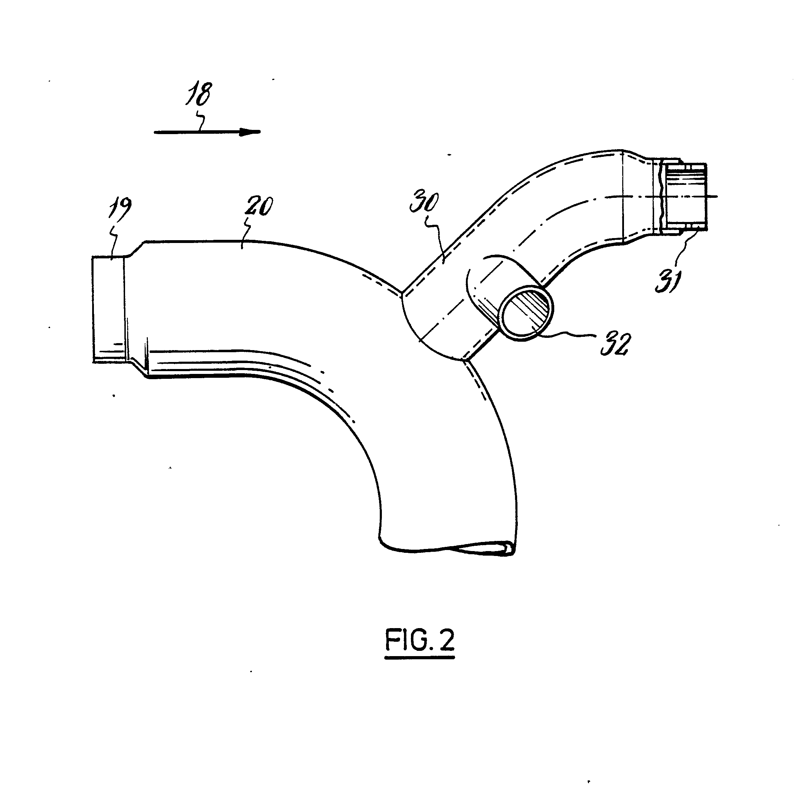

In a further embodiment as depicted in Fig. 2, the pipe 20 is vented off upstream of nozzle 19 into a tube 30 extending generally in the opposite direction to that of nozzle 19 and terminating in a nozzle 31 directing air longitudinally along the boiler chamber in the direction of arrow 18 and a pair of additional nozzles 32 directing air tangentially.

The fan 21 is designed to provide sufficient volume of air to permit the necessary air flow from nozzle 19 to be maintained whilst providing an approximately equivalent volume of air flowing in tube 30 and distributed substantially evenly through nozzles 31 and 32. The effect is to distribute the air flow evenly across the boiler chamber at the downstream end thereof. As a result of the air distribution the hot gases in this downstream part of the boiler during operation are evenly distributed across the so-called "wet back" of the boiler, which in turn increases the heat transfer to the latter, and there is also a substantial cooling of the exhaust gases thus solidifying silicates and other molten in suspension solids before they enter the usual second pass gas exit tubes of the boiler. Solidifying of these suspended gas constituents substantially reduces their deposition and thus build-up on the boiler walls and gas exit tube walls during passage therethrough.

Therefore the additional nozzles 31 and 32 provide a balanced cooling effect whilst producing a vectored turbulence for the gases leaving the boiler chamber.

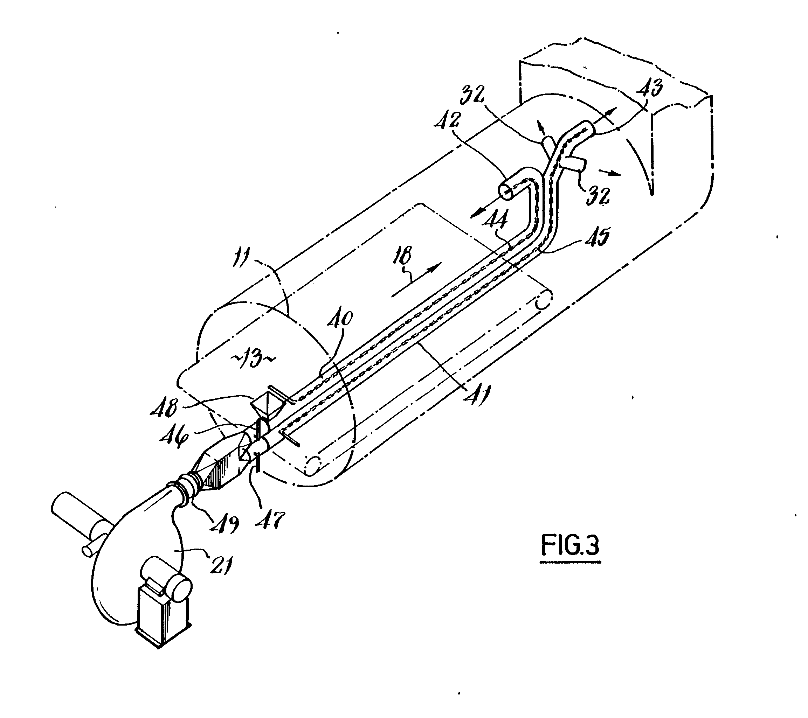

Referring now to Fig. 3 where like parts are afforded like reference numerals, there is shown a further alternative arrangement in which two parallel tubes 40 and 41 pass one above the other or side by side beneath the conveyor throughout the length of the boiler from fan 21. In this case reverse air injection nozzle 42 is fed from pipe 40 whilst forward air injection nozzle 43 is fed from pipe 41. Within pipe 40 an inner smaller bore pipe 44 having its outlet nozzle concentric with nozzle 42 may be used to deliver combustible liquids or gases to flow through the boiler in the reverse direction along with the reverse air. Similarly, an inner smaller bore pipe 45 within pipe 41 may carry coolant liquor or gas to the point of exit of nozzle 43.

In this embodiment, dampers for pipes 40 and 41 are shown schematically at 46 and 47 respectively.

A hopper 48 is provided to deliver to pipe 40 additional materials such as magnesia dust.

In the embodiment of Fig. 3 the pipe assembly 40, 41 may be pivoted into an inoperative position by way of rotary connection 49, if required, or alternatively maintained in a fixed position whilst supplies of liquid or gaseous materials are simply discontinued by means of dampers 46 and 47.

It is not intended to limit the invention to the above examples only, many variations, such as might readily occur to one skilled in the art, being possible without departing from the scope of the invention as defined herein. For example, the incoming air in its passage to nozzles 19, 31 and 32 may be otherwise preheated by indirect heat exchange with the exhaust gases from the boiler or by some other means.

In all embodiments the entry positions for all pipes may be other than at the upstream end of the boiler, any convenient entry positions being selected for convenience provided that nozzles 19, 31 and 32 or nozzles 42 and 43 can be located correctly.

**Claims**

1. A boiler in which a bed of solid fuel is carried on a moving conveyor in one direction through a combustion chamber, characterised by an air or other gas injection nozzle disposed above the conveyor adjacent the downstream or output end thereof and connected to a supply of air or other gas to direct a stream thereof towards the upstream or inlet end thereof such that the airsteam passes over the fuel in countercurrent with the gaseous products of combustion to enhance combustion of the bed of fuel on the conveyor.

2. A boiler according to Claim 1, including a second gas injection nozzle disposed above the conveyor adjacent the downstream end thereof to direct a stream of air or other gas in a direction opposite to the airstream issuing from said first mentioned injection nozzle.

3. A boiler according to Claim 2, including further nozzles connected to said second gas injection nozzle to direct streams of air or other gas transversely with respect to the airstreams issuing from said first and second injection nozzles, in the region of the outlet end of the conveyor.

4. A boiler according to any preceding claim, including damper means to control the flow of air or other gas to said injection nozzle or nozzles.

5. A boiler according to any preceding claim, including a third nozzle connected to a supply pipe and positioned to direct a stream of combustible liquids or gases from the region of the downstream or output end of the conveyor towards the upstream or inlet end thereof together with said countercurrent airstream.

6. A boiler according to Claim 2 or Claim 3, including a fourth nozzle connected to a supply pipe and positioned to direct a stream of coolant liquid or gas towards the downstream or output end of the boiler together with the airstream from said second gas injection nozzle.

7. A boiler according to any preceding claim, in which one or more supply pipes for said injection nozzle or nozzles are disposed in the base of the boiler combustion chamber so that the pipe or pipes act as a heat exchanger to preheat their gaseous or liquid contents prior to introduction into the chamber.

8. A boiler according to any preceding claim, including a hopper connected to the supply pipe or pipes for said nozzle or nozzles in the upstream end of the boiler for introduction of additional materials such as magnesia dust.

9. A boiler according to Claim 3, wherein said nozzles are connected to a supply fan by at least one pipe mounted so as to be rotatable generally about its axis thus to enable the respective nozzle or nozzles to be located selectively in an inoperative position below the level of the moving conveyor.

l0. A boiler according to Claim 3 , including separate parallel supply pipes for said first and second injection nozzles, the pipes being connected via control dampers to a fan situated outside the boiler casing.

FIG.1

0 235 938

FIG. 2

FIG.3